# EUROPEAN PATENT SPECIFICATION

(11) **EP 3 845 858 B1**
(45) Date of publication and mention of the grant of the patent: **13.09.2023**
(21) Application number: 20217634.3
(22) Date of filing: 29.12.2020
(51) Int. Cl.: G01C 11/02, G08B 13/196, G06T 7/11, H04N 7/18

(54) **USING THREE DIMENSIONAL DATA FOR PRIVACY MASKING OF IMAGE DATA**
VERWENDUNG DREIDIMENSIONALER DATEN ZUR DATENSCHUTZMASKIERUNG VON BILDDATEN
UTILISATION DE DONNÉES TRIDIMENSIONNELLES POUR LE MASQUAGE DE CONFIDENTIALITÉ DE DONNÉES D'IMAGE

(30) Priority: 02.01.2020 US 202062956382 P
(43) Date of publication of application: 07.07.2021
(73) Proprietor: Faro Technologies, Inc., Lake Mary, FL 32746-6204 (US)
(72) Inventor: HEIDEMANN,, Rolf, 70825 Korntal-Münchingen (DE); WOLKE, Matthias, 70825 Korntal-Münchingen (DE)
(74) Representative: Harris, Oliver John Richard

(56) References cited:
- US-A1- 2009 128 632
- US-A1- 2010 328 460
- US-A1- 2018 089 972
- US-A1- 2019 206 044

## Description

### BACKGROUND

The subject matter disclosed herein relates to manipulating images and, in particular, to using three dimensional data for privacy masking of image data.

Two-dimensional (2D) images can be used, for example, in photogrammetry, which is a method of making three-dimensional (3D) measurements from 2D images or photographs. When two or more images are acquired at different positions that have an overlapping field of view, common points or features may be identified on each image. By projecting a ray from the camera location to the feature/point on the object, the 3D coordinate of the feature/point may be determined using trigonometry.

In order for photogrammetry to be used, the images acquired of the object need to overlap so that common features can be identified. It has been found that the accuracy of the 3D coordinates may be increased when a common feature/point is located in three images acquired at different camera positions or poses.

Accordingly, while existing photogrammetry systems for measuring three-dimensional coordinates are suitable for their intended purposes the need for improvement remains, particularly in providing masking of 2D images, such as those used for photogrammetry. Documents US 2019/206044 A1, US 2018/089972 A1, US 2010/328460 A1, and US 2009/128632 A1 disclose known systems for privacy masking of 2D images, such as those provided by surveillance cameras.

### BRIEF DESCRIPTION

According to one aspect of the disclosure, a photogrammetry system is provided. The example photogrammetry system includes a two-dimensional (2D) camera responsive to first executable instructions which when executed by the 2D camera is operable to capture a 2D image and transmit the 2D image. The photogrammetry system further includes a processing system communicatively couplable to the 2D camera. The processing system is responsive to second executable instructions which when executed by the processing system is operable to receive the 2D image from the 2D camera. The 2D image has a three-dimensional data-set associated therewith. The processing system is further operable to process the 2D image to generate a processed image identifying regions to be masked, and mask at least a portion of the 3D data set based at least in part on the processed image.

According to an embodiment, the processing system is further operable to: save the masked 3D data set to a data store.

According to an embodiment, the system provides a user device communicatively couplable to the processing system, the user device being operable to: mask at least a portion of the processed image to generate a masked image; and display the masked image on a display of the processing system without displaying the at least the portion of the processed image that is masked.

According to an embodiment, to mask the at least the portion of the processed image to generate the masked image is based on a restriction imposed based on a geographic jurisdiction.

According to an embodiment, to process the 2D image to generate the processed image comprises: performing photogrammetry on the 2D image.

According to an embodiment, the 2D camera is operable to: acquire the 3D data set associated with the 2D image.

According to an embodiment, to mask the at least the portion of the processed image to generate the masked image is based on three-dimensional information calculated based on at least two 2D images using photogrammetry.

According to an embodiment, the system further comprises an unmanned aerial vehicle, the 2D camera being mounted on the unmanned aerial vehicle.

According to an embodiment, the system further comprises a fixture, the fixture being user-configurable to rotate about a roll axis, a pan axis, and a tilt axis, the 2D camera being mounted to the fixture to rotate about the roll axis, the pan axis, and the tilt axis.

According to an embodiment, masking at least a portion of the 3D data set comprises masking persons or faces associated with the persons.

According to an embodiment, the 2D camera is further operable to encrypt the 2D image to generate an encrypted image, wherein transmitting the 2D image comprises transmitting the encrypted image.

According to an embodiment, receiving the 2D image comprises receiving the encrypted image, the processing system being further operable to decrypt the encrypted image to convert the encrypted image back into the 2D image.

According to an embodiment, the 2D camera is further operable to: calculate a hash value for the encrypted image.

According to an embodiment, the processing system is further operable to: verify the validity of the encrypted image using the hash value calculated by the 2D camera.

According to another aspect of the disclosure, a method is provided. The method includes capturing, by a two-dimensional (2D) camera, a 2D image, the 2D image having a three-dimensional (3D) data set associated therewith. The method further includes processing, by a processing system, the 2D image to generate a processed image identifying regions to be masked, and masking, by the processing system at least a portion of the 3D data set based at least in part on the processed image.

According to an embodiment, the processing system performs feature detection to detect image features, and wherein the processing system further performs matching on the unmasked images.

According to an embodiment, image features are used to calculate three dimensional points, and wherein each of the points is assigned a binary attribute based at least in parts on a 3D position of the point.

According to an embodiment, the 2D image is masked based at least in part on the attribute of at least one 3D point that is related to a feature within the images.

According to an embodiment, the method further comprises: subsequent to the capturing and prior to the masking, encrypting the image to generate an encrypted image.

According to an embodiment, the method further comprises subsequent to the encrypting and prior to the masking, calculating a hash value for the encrypted image, and transmitting, by the 2D camera, the encrypted image and the hash value to the processing system via network.

According to an embodiment, the method further comprisessubsequent to the transmitting and prior to the masking, receiving the encrypted image and the hash value from the 2D camera, decrypting the encrypted image, and verifying the encrypted image based at least in part on the hash value.

According to an embodiment, the method further comprises subsequent to the verifying and prior to the masking, processing the image using photogrammetry to generate a processed image.

According to an embodiment, the method further comprising: subsequent to the masking, applying the mask to the photogrammetric result.

According to an embodiment, the method further comprising: subsequent to the masking, enabling a user device to access the masked image from a user device.

According to an embodiment, the user device is operable to display the masked image on a display of the processing system without displaying the at least the portion of the processed image that is masked.

According to an embodiment, the method further comprising: subsequent to the masking, saving the masked image.

According to an embodiment, the masking is based on a restriction imposed based on a geographic jurisdiction.

According to another aspect of the disclosure, a system is provided. The system includes a camera configured to capture a two-dimensional (2D) image of an area of interest. The system further includes a scanner configured to capture three-dimensional (3D) information of the area of interest. The system further includes a processing system configured to mask at least one region of the 2D image that is 3D-wise inside or outside of a defined volume.

According to an embodiment, the scanner uses a projected light pattern and one of the camera or another camera using triangulation for performing a depth determination.

According to an embodiment, the camera is further configured to acquire intenisity information and depth information about the area of interest.

According to an embodiment, the camera is configured as a stereo-camera for acquiring the 3D information of the area of interest.

According to an embodiment, the 2D image is acquired at a first time and the 3D information is captured at a second time different than the first time.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1A depicts a representation of an environment having regions associated with structures according to one or more embodiments described herein;
FIG. 1B depicts a representation of the environment of FIG. 1A having masking applied to verboten regions for certain images/videos according to one or more embodiments described herein.
FIG. 2 depicts a block diagram of a processing system for masking images captured by the camera of FIGS. 1A, 1B according to one or more embodiments described herein;
FIG. 3 depicts a flow diagram of a method for using three dimensional data for privacing masking of image data according to one or more embodiments described herein; and
FIG. 4 depicts a block diagram of a processing system for implementing the presently described techniques according to one or more embodiments described herein.

The detailed description explains embodiments of the disclosure, together with advantages and features, by way of example with reference to the drawings.

### DETAILED DESCRIPTION

Embodiments of the present disclosure provide for a system and method of using three dimensional data for privacy masking of image data. Such image data can be used in photogrammetry, for example. Photogrammetry is a technique for measuring objects using images, such as photographic images acquired by a digital camera for example. Photogrammetry may be based on markers (e.g., lights or reflective stickers) or based on natural features. By acquiring multiple images of an object, or a portion of the object, from different positions or poses, 3D coordinates of points on the object may be determined based on common features or points and information on the position and pose of the camera when each image was acquired. In order to obtain the desired information for determining 3D coordinates, the features are identified in two or more images. Since the images are acquired from different positions or poses, the common features are located in overlapping areas of the field of view of the images. It should be appreciated that photogrammetry techniques are described in commonly-owned U.S. Patent Application number 16/596,047.

To perform photogrammetry, for example, images are captured, such as with a camera having a sensor, such as a photosensitive array for example. However, in certain scenarios, capturing images may be restricted or prohibited. For example, in certain geographic jurisdictions, capturing images of or on private property and/or the property of others may be restricted. As one such example, it may be legal restrictions in a certain geographic jurisdiction to capture an image that includes a neighbor's house except from a publicly accessible position (e.g., not from an unmanned aerial vehicle/satellite above a fence). As another such example, a certain geographic jurisdiction may restrict the use of a surveillance/security camera pointing onto public property from one's own property even if the region of interest is in the space between one's own house and the border of one's own property. This can hinder one's ability to take images (such as by a surveillance/security camera on one's own property) used for photogrammetry from one's own property because an adjacent building or a neighbor's house may be in the background or otherwise included in the images. Moreover, using photogrammetrically processed data, such as in court proceedings in such geographic jurisdiction, may be problematic if processing is not secured by encryption and signatures to control a chain of custody and avoid leakage of the images.

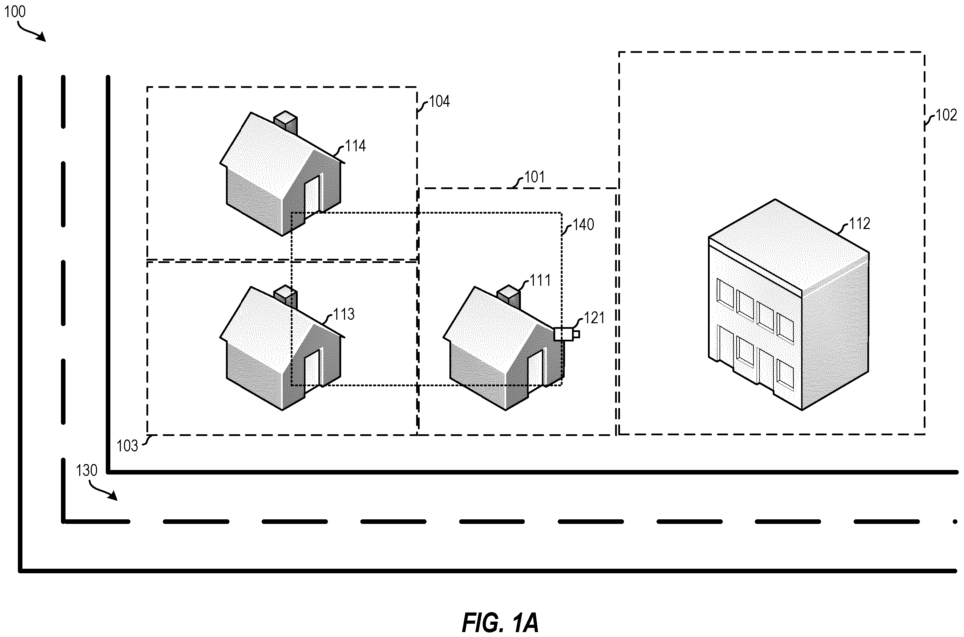

FIG. 1A depicts a representation of an environment 100 having regions 101, 102, 103, 104 associated with structures 111, 112, 113, 114 according to one or more embodiments described herein. In the illustrated embodiment, each of the regions 101, 102, 103, 104 is not commonly-owned, e.g. owned by separate persons or entities. The structure 111 has a camera 121, which can be any suitable device for capturing images, such as a surveillance/security camera, associated therewith. It should be appreciated that the camera 121 can represent one or more cameras. It should further be appreciated that other of the structures 112, 113, 114 can also have one or more cameras associated therewith. The regions 101-104 can be property boundaries configured and arranged as shown, for example, and can abut a road 130. In certain geographic jurisdictions, it may be permissible to capture an image or video from the road 130 of one or more of the regions 101-104 and/or their associated structures 111-114, or it may not be permissible to capture an image or video from one or more of the regions 101-104 of the other of the one or more of the regions 101-104 and/or their associated structures 111-114. For example, it may be permissible in certain geographic jurisdictions to capture an image or video of the road 130, the region 101, and/or the structure 111 with the camera 121. However, in such geographic jurisdictions, it may not be permissible to capture an image or video of the regions 102-104 and/or their associated structures 112-114.

Consider the case where one owns (or has permission to use) the property associated with the region 101 and/or the structure 111 and desires to captures images/video using the camera 121. In one or more geographic jurisdictions, there can be one or more of the restrictions for capturing image/video: 1) one can capture images/video on one's own private property (e.g., the region 101) (or other private property with the permission of its owner) and use such images/video; 2) one is only allowed to take images from publically accessible grounds (e.g., the road 130) of others' property (e.g., the regions 102-104) without using unmanned aerial vehicle, ladders, etc., and not of inside rooms or of private areas; 3) one is allowed to take images of public buildings from publically accessible ground (e.g., the road 130) without using unmanned aerial vehicle, ladders, etc.; and 4) one cannot capture images/video of specifically protected areas (e.g., military, police, etc.).

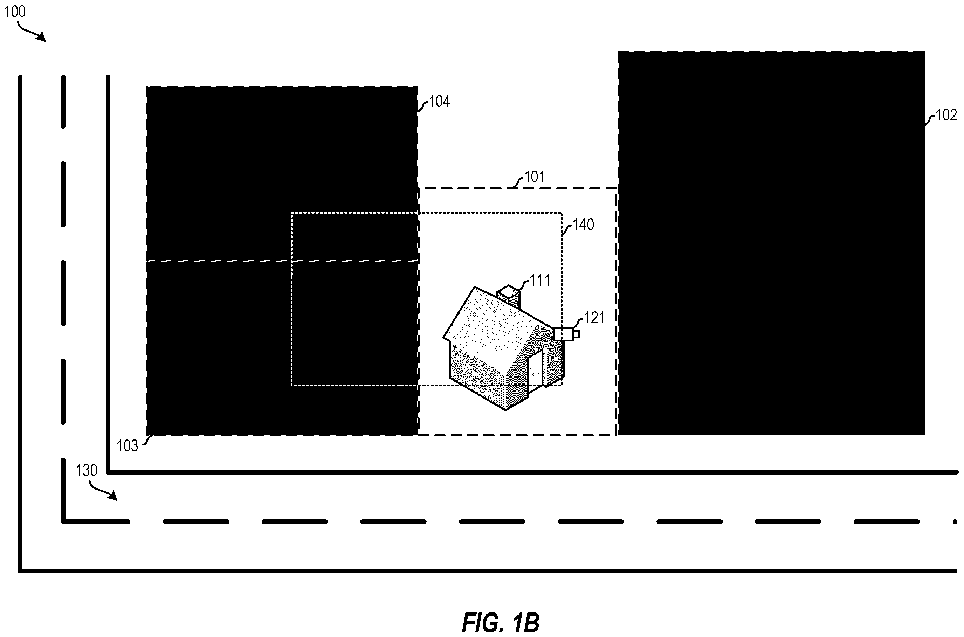

FIGS. 1A and 1B also depict a field of view of an example 2D image 140 (shown as dotted lines). As shown in FIG. 1B, the example 2D image 140 is partially masked (the forboden area of the regions 10, 104) and partially unmasked (the non-forbodden area of the region 101).

Embodiments described herein address these problems by providing techniques for privacy masking of images. Accordingly, the privacy masking techniques described herein enable images to be captured where they may otherwise be forbidden, such as by law, and enables photogrammetry on such images. This is accomplished by encrypting the image data immediately after it is captured, automatically processing the encrypted image data to generate three dimensional (3D) data, and masking the 3D regions to which the person capturing the image should not have access, or otherwise does not have a legal right to do so. Accordingly, a photogrammetrically calculated 3D data set can be generated that only includes regions permissible to the user (e.g., the user's own house and/or property) without including information for regions not permissible to the user (e.g., the user's neighbor's house and/or property). This preserves the privacy of regions not permissible to the user. In this way, an end-user does not have access to raw images/video; rather, the raw images/video remains encrypted until processed and masked, and only the masked version is made available to the end-user or only the masked 3D data set is made available.

Additionally, the privacy masking techniques described herein can enable the masking of surveillance/security camera image (and/or video) data to allow surveillance in situations/locations not currently possible. This is accomplished using 3D information for masking the image/video data. The privacy masking techniques described herein also provide for verifying images using a hash technique in forensics to prove the chain of custody.

"Privacy masking," or simply "masking," as used herein, broadly encompasses concealing a portion of an image. Masking can be accomplished by completely blacking out a region of an image, by identifying certain features (e.g., persons, faces of persons, signs, etc.) and pixelating the identified features, by reducing the textural or 3D resolution of certain regions, and the like.

FIG. 1B depicts a representation of the environment 100 of FIG. 1A having masking applied thereto for images/videos captured by the camera 121 associated with the structure 111 according to one or more embodiments described herein. In this example, the verboten regions (e.g., the regions 102-104) are masked as shown. Verboten regions are those regions that are restricted from being photographed/videoed in a certain geographic jurisdiction relative to another region (i.e., the region 101).

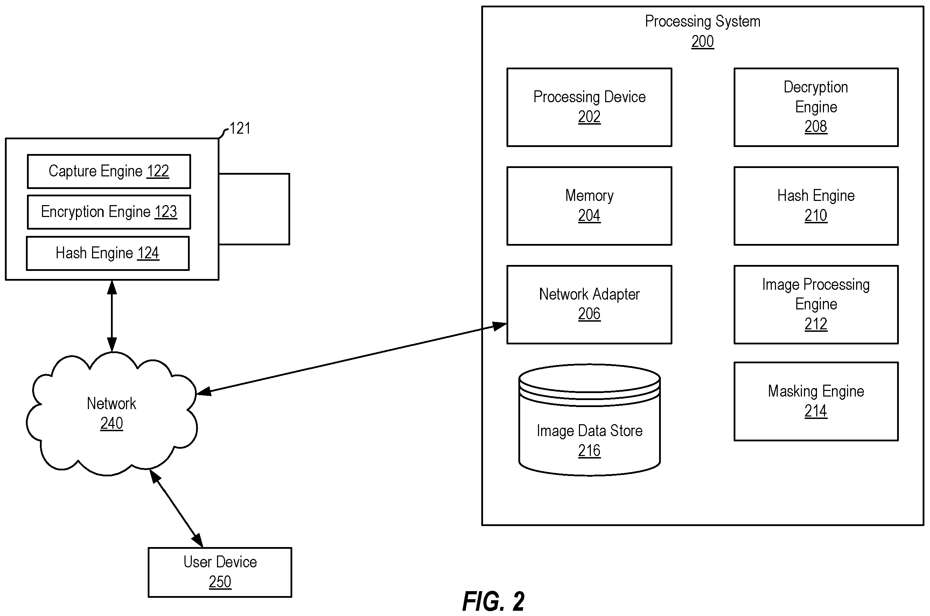

FIG. 2 depicts a block diagram of a processing system 200 for masking images captured by the camera 121 of FIGS. 1A, 1B (or another suitable camera) according to one or more embodiments described herein. The camera 121, which can be a 2D camera or a 3D camera (RGBD or time-of-flight for example), captures, using a capture engine 122, an image, such as of the region 101 of FIG. 1A, 1B. The camera 121 then encrypts, using an encryption engine 123, the image before transmitting it to the processing system 200. Although not shown, the camera 121 can include other components such as a processing device, a memory, a network adapter, and the like, which may be similar to those included in the processing system 200 as described herein.

In some examples, the camera 121 is disposed in or mounted to an unmanned aerial vehicle. In some examples, the camera 121 is mounted to a fixture, which is user-configurable to rotate about a roll axis, a pan axis, and a tilt axis. In such examples, the camera 121 is mounted to the fixture to rotate about the roll axis, the pan axis, and the tilt axis.

The processing system 200 receives the image and then processes it by decrypting the image, masking verboten regions to generate a masked image, and storing the masked image. In one or more embodiments described herein, the processing system 200 can perform one or more of: decrypting the encrypted image, checking a hash value to verify the encrypted image, processing the image (e.g., performing photogrammetry on the image), masking the image, masking 3D data associated with the image, calculating a hash value for the masked image and the 3D data associated with the image, and encrypting the masked image and the 3D data associated with the image with a user key.

A user device 250 (e.g., a smartphone, a laptop or desktop computer, a tablet computer, a wearable computing device, a smart display, and the like) can then access the masked image, which, when viewed by a user, has verboten regions masked such that they cannot be viewed by the user as shown in FIG. 1B. In one or more embodiments described herein, the user device can calculate 3D data associated with the image, decrypt a masked image and 3D data associated with the image using the user key, and calculate a hash value to verify the encrypted masked image.

The processing system 200 includes a processing device 202, a memory 204, a network adapter 206, a decryption engine 208, a hash engine 210, an image processing engine 212, a masking engine 214, and an image data store 216. The various components, modules, engines, etc. described regarding the processing system 200 (as well as the camera 121 and or the user device 250) of FIG. 2 can be implemented as instructions stored on a computer-readable storage medium, as hardware modules, as special-purpose hardware (e.g., application specific hardware, application specific integrated circuits (ASICs), application specific special processors (ASSPs), field programmable gate arrays (FPGAs), as embedded controllers, hardwired circuitry, etc.), or as some combination or combinations of these. According to aspects of the present disclosure, the engine(s) described herein can be a combination of hardware and programming. The programming can be processor executable instructions stored on a tangible memory, and the hardware can include the processing device 202 for executing those instructions. Thus a system memory (e.g., memory 204) can store program instructions that when executed by the processing device 202 implement the engines described herein. Other engines can also be utilized to include other features and functionality described in other examples herein.

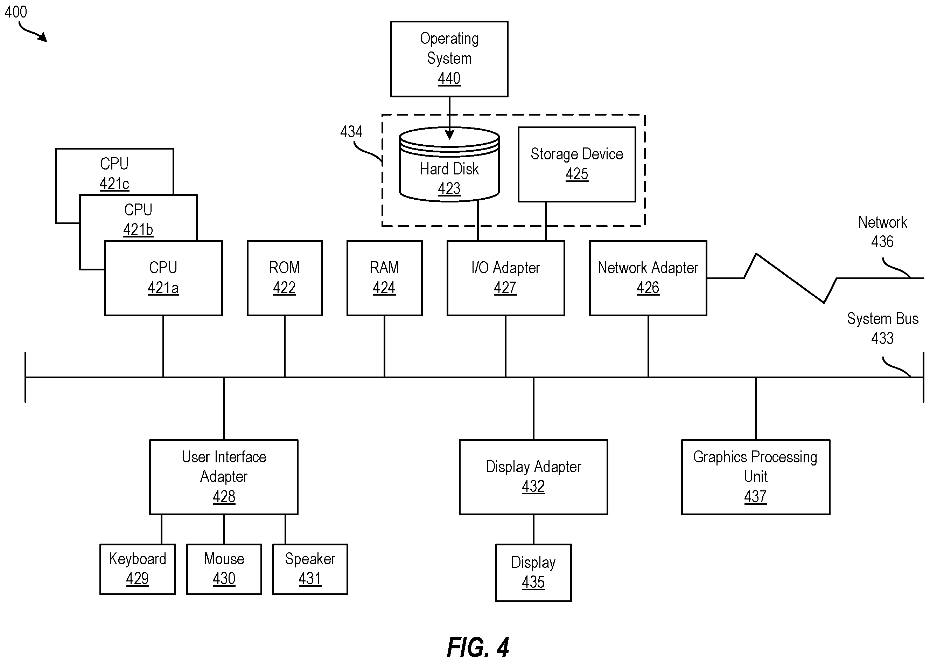

The network adapter 206 (e.g., the network adapter 426 of FIG. 4) enables the processing system 200 to transmit data to and/or receive data from other sources, such as other processing systems, data repositories, and the like. As an example, the processing system 200 can transmit data to and/or receive data from the camera 121 and/or the user device 250 directly and/or via a network 240.

The network 240 represents any one or a combination of different types of suitable communications networks such as, for example, cable networks, public networks (e.g., the Internet), private networks, wireless networks, cellular networks, or any other suitable private and/or public networks. Further, the network 108 can have any suitable communication range associated therewith and may include, for example, global networks (e.g., the Internet), metropolitan area networks (MANs), wide area networks (WANs), local area networks (LANs), or personal area networks (PANs). In addition, the network 108 can include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, satellite communication mediums, or any combination thereof.

In some examples, the camera 131 captures 2D image(s) of an area of interest and a scanner (not shown) captures 3D information of the area of interest. In some examples, the camera 131 and the scanner are separate devices; however, in some examples, the camera 131 and the scanner are integrated into a single device. For example, the camera 121 can include depth acquisition functionality and/or can be used in combination with a 3D acquisition depth, such as a time of flight camera, a stereo camera, a triangulation scanner, and the like. The processing system 200 masks at least one region of the 2D image that is 3D-wise inside or outside ofa defined volume as described herein. The 3D information can be measured/acquired/captured using a projected light pattern and a second camera (or the camera 121) using triangulation techniques for performing depth determinations. In some examples, a time-of-flight (TOF) approach can be used to enable intensity information (2D) and depth information (3D) to be acquired/captured. The camera 121 can be a stereo-camera to facilitate 3D acquisiton. In some examples, the 2D image and the 3D information (i.e., a 3D data set) can be captured/acquired at the same time; however, the 2D image and the 3D information can be obtained at different times.

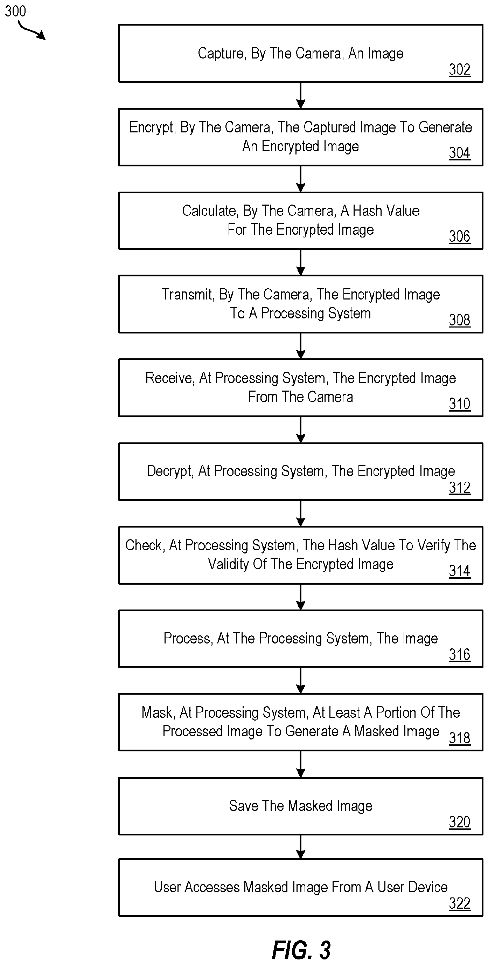

The features and functionality of the processing system 200 are now described with reference to FIG. 3 but are not so limited. In particular, FIG. 3 depicts a flow diagram of a method 300 for masking of two-dimensional images according to one or more embodiments described herein. The method 300 can be implemented on any suitable processing system (e.g., the processing system 200 of FIG. 2, a cloud computing node (not shown), the processing system 400 of FIG. 4, etc.), any suitable processing device (e.g., the processing device 202 of FIG. 2, the processors 421 of FIG. 4, etc.), and/or combinations thereof.

At block 302, the camera 121 captures an image using the capture engine 122. At block 304, the camera 121 encrypts the captured image using the encryption engine 123 to generate the encrypted image. In some examples, software and/or hardware for performing the encrypting is integrated into the camera 121 as shown in FIG. 2. However, in some examples, such software and/or hardware for performing the encrypting is integrated into a separate device attached to or associated with the camera 121. Any suitable techniques for encrypting images or video can be implemented by the encryption engine 123. These can include, for example, transposition-based techniques, value transformation-based techniques, position substitution-based techniques, and others. Encryption can be performed such that neither a user of the user device 250 nor a service provider/user of the processing system 200 has access to the unencrypted images. To make the encryption more secure, encryption keys of the user of the user device 250 could be time-limited.

In some examples, the camera 121 also includes a hash engine 124, which calculates a hash value for the encrypted image using a hash function at block 306. Once the captured image is encrypted, the camera 121 transmits the encrypted image to the processing system 200 directly and/or via the network 240. It should be appreciated that the image is not transmitted unencrypted. That is, the image is not transmitted from the camera 121 until it has been encrypted by the encryption engine 123. Thus, only the encrypted image is transmitted by the camera 121.

At block 310, the processing system 200 receives an encrypted image (which could also be multiple encrypted images, encrypted video, or encrypted videos) from the camera 121. At block 312, once the encrypted image is received, the decryption engine 208 of the processing system 200 decrypts the encrypted image using a decryption technique that corresponds to the encryption technique utilized by the encryption engine 123 of the camera 121 to encrypt the image. In an embodiment in which the camera 121 includes a hash engine 124 and the camera calculates a hash value for the encrypted image, the hash engine 210 checks the hash value using the hash function at block 314. The hash value is used to verify the validity of images/data (i.e., the encrypted image).

At block 316, the image processing engine 212 performs processing techniques on the image. An example of an image processing technique is photogrammetry. In this way, unencrypted images are available for photogrammetric processing on the images. An example of the photogrammetric processing includes finding features on a pixel scale, matching these features between images, and finding the relative orientation between the images based at least in part on the matched features.

As one example, the processing can be performed on a 2D image such as a satellite image. As another example, the processing can be performed on a three-dimensional (3D) map view such as that taken by a satellite (referred to as "satellite mapping"). For example, a region like a terrace of a structure on a satellite view is visible from the satellite view but is actually private and not visible from publically accessible points (e.g., they may be covered by fences or hedges). To use these satellite mapping views, masking can be performed as described in block 318 to remove verboten regions. To identify verboten regions, a region of interest and borders between the region of interest and verboten regions is identified. First, a border between two regions (e.g., a border between the region 101 and the region 102, a border between the region 101 and the region 103, etc.) is identified. To define the borders, images can be taken from points directly above the border on the satellite mapping view or on a smaller polygon in the insider volume. The volume above and below this polygon is then reconstructed. The region of interest (e.g., the region 101) can be defined by drawing a polygon or alike on a map that contains absolute positions (e.g., from satellite mapping) and, using the satellite positioning of the camera poses during acquisition, link 3D data to the absolute positions.

Masking, as described herein, is made possible by using a relative orientation between 2D images in photogrammetry applications, where at least some images are associated with a defined location (e.g., when taken from corners of a masking polygon). Together, with 3D information on the matched feature point described herein, the verboten regions in each image can be identified. As there is a clear indication for each 3D point if it is allowed or not (i.e., in a verboten region or not), and the location of these 3D points in the images are krown, these points can act as "seed points" for an image segmentation which dividies the image into the verboten and allowen (or non-verboten) regions. Such segmentation can include one or more of the following image processing techniques: region growing, super pixels, structural segmentation, and stochastic segmentation. It should be appreciated that this 3D information can be sparce and the actual (dense) 3D reconstruction can be performed with pixel information from the allowed (non-verboten) regions after the masking.

In another example, the processing at block 316 is performed in a cloud computing environment. For example, in one or more embodiments, the processing system 200 can be implemented as a cloud computing system. Cloud computing can supplement, support, and/or replace some or all of the functionality of the elements of the processing system 200. Additionally, some or all of the functionality of the elements of the processing system 200 can be implemented as a node of a cloud computing system. A cloud computing node is only one example of a suitable cloud computing node and is not intended to suggest any limitation as to the scope of use or functionality of embodiments described herein. In such cases, parameters and settings used for processing and masking (see block 318) can be stored in the cloud computing environment to avoid users privately processing/accessing the verboten regions. Examples of such parameters and settings include the definition of the borders between the region of interest (the allowable region) and the verboten region(s).

At block 318, the masking engine 214 masks the processed image to mask verboten regions of the image, which has been decrypted and processed, to generate a masked image. In some examples, a person or persons (or a face associated with a person) is masked. The masking is performed, for example, using the boundaries, a region of interest, and verboten regions identified at block 316. In some examples, the processed image is masked by blacking out the verboten regions (see FIG. 1B), by blurring the verboten regions, by pixelating the verboten regions, by deleting/cropping the verboten regions, reducing the resolution of the verboten regions, and the like. In some examples, a margin of safety is applied to the boundaries (e.g., 1 foot, 1 meter, 3 meters, 6 inches, 50 cm, etc.) to reduce the size of the region of interest to ensure that portion of the verboten regions are not exposed. That is, in examples, it may be desired to risk masking a portion of an allowable region over failing to mask all of the verboten region(s).

According to examples, masking is applied after the processing at block 316 is performed. However, in some examples, some or all of the information associated with the original image captured by the camera 121 is stored, such as feature point descriptors of natural features extracted from the verboten regions of the image. This ensures that the images can be processed again without loss of photogrammetric quality. The feature points can be sparse and a reconstruction of the original image is not possible using the feature points, thus ensuring the verboten regions are and remain masked. However, the feature points can be used to create a very rough but true-to-scale sparse point cloud of buildings/objects (e.g., the structures 112-114) that are in the verboten regions (e.g., the regions 102-104). These points can also be meshed to give the appearance of a complete model. This data may also be used to retrieve information about location, dimensions, and geometry, which can be desired, such as for construction planning in the region of interest. However, it should be appreciated that no fine details or texture is stored or otherwise preserved. For example, a high-resolution model of a structure in a verboten region can be calculated without any texture. As an example, if a model is calculated using photogrammetric techniques, it cannot be calculated without the existence of a high resolution texture. However, the texture can be removed after the calculation or the image can be blurred (rather than completely masked) in suc ha way that the model creation is still possible but with limited resolution and limited details.

In some examples, rules, regulations, laws, etc., of geographic jurisdictions can be considered and applied when masking. For example, a law regarding which regions are verboten can differ between different geographic jurisdictions. The masking can be applied for a particular image according to the rules, regulations, laws, etc. of the geographic jurisdiction associated with that particular image.

In some examples, masking can vary depending on what tools/techniques were used to capture the image originally. For example, masking may be applied differently for an image captured by a camera disposed in or mounted to an unmanned aerial vehicle or from a ladder (i.e., any elevated location) than for an image not captured at an elevated location.

According to one or more embodiments described herein, masking can be based on depth. For example, the camera 121 can include depth acquisition functionality and/or can be used in combination with a 3D acquisition depth, such as a time of flight camera, a stereo camera, a triangulation scanner, and the like. In another example, regions of an image can be masked based on 3D position information. Regions of an image can then be masked based on their depth, 3D position information, and the like.

In situations where the camera 121 is a surveillance/security camera, a masked region can be unmasked in certain cases, such as if an intruder is detected. This can be useful to identify the intruder and/or in a court environment to prosecute such intruder. In an embodiment, the unmasking is performed by a legally authorized person (e.g. police).

At block 320, the masked image is saved, such as to the image data store 216. In some examples, saving the masked image can also include encrypting the masked image to avoid leakage of the image and 3D data associated therewith. For example, the masked image and the 3D data associated therewith can be encrypted such that only the processing system 200 can access the 3D data. Similarly, the masked image can be encrypted such that only a user having an associated encryption key can access the masked image.

At block 322, the user device 250 accesses the masked image from the image data store 216. It should be appreciated that only the masked image is made available to the user device 250 and not unmasked images if they contain verboten regions.

The approached depicted in FIG. 3 enables images to be acquired even though they would normally be restricted in some geographic jurisdiction. In particular, the images can be acquired because they are encrypted before transmitted and are masked (to remove verboten regions) before being made available to a user. This way, during processing (e.g., photogrammetry), elements that are later masked can still contribute to the accuracy of the processing results by providing feature points. Unencrypted versions of the image can be made available by masking verboten regions while showing regions that belong to "allowable" regions.

The approach depicted in FIG. 3 further enables a secure chain of custody. For example, in public safety applications, it can be desirable to secure the chain of custody of images/video to prove (in the case of photogrammetry) that the images have not been manipulated. This can be achieved in the present case by calculating and exchanging the hash values for the images between the camera 121 and the processing system 200 when the images are exchanged.

In some examples, one (i.e., a neighbor) who owns one of the verboten regions 102-104 may see the camera 121 and be concerned with whether the camera 121 is capturing images of the verboten regions. In such cases, the fact that the neighbor does not know when he sees the camera 121 whether it is taking photogrammetry images of the structure 111 or another structure (e.g., the structure of the neighbor's property) using the privacy-preserving masking described herein or not can be problematic. To address this concern, the processing system 200 or another suitable system can provide a special view for the neighbor to check the parameters of the processing (e.g., the border and the masking options). Then the owner of the camera 121 can give the neighbor information to access such view.

Regarding the method 300 of FIG. 3, additional processes also may be included, and it should be understood that the process depicted in FIG. 3 represents an illustration, and that other processes may be added or existing processes may be removed, modified, or rearranged without departing from the scope of the present disclosure. For example, one or more of the blocks 302, 304, 306, 308, 310, 312, 314, 316, 318, 320, 322 can be removed, modified, or rearranged without departing from the scope of the present disclosure.

It is understood that one or more embodiments described herein are capable of being implemented in conjunction with any other type of computing environment now known or later developed. For example, FIG. 4 depicts a block diagram of a processing system 400 for implementing the techniques described herein. In accordance with one or more embodiments described herein, the processing system 400 is an example of a cloud computing node (not shown) used in a cloud computing environment. In examples, processing system 400 has one or more central processing units ("processors" or "processing resources") 421a, 421b, 421c, etc. (collectively or generically referred to as processor(s) 421 and/or as processing device(s)). In aspects of the present disclosure, each processor 421 can include a reduced instruction set computer (RISC) microprocessor. Processors 421 are coupled to system memory (e.g., random access memory (RAM) 424) and various other components via a system bus 433. Read only memory (ROM) 422 is coupled to system bus 433 and may include a basic input/output system (BIOS), which controls certain basic functions of processing system 400.

Further depicted are an input/output (I/O) adapter 427 and a network adapter 426 coupled to system bus 433. I/O adapter 427 may be a small computer system interface (SCSI) adapter that communicates with a hard disk 423 and/or a storage device 425 or any other similar component. I/O adapter 427, hard disk 423, and storage device 425 are collectively referred to herein as mass storage 434. Operating system 440 for execution on processing system 400 may be stored in mass storage 434. The network adapter 426 interconnects system bus 433 with an outside network 436 enabling processing system 400 to communicate with other such systems.

A display (e.g., a display monitor) 435 is connected to system bus 433 by display adapter 432, which may include a graphics adapter to improve the performance of graphics intensive applications and a video controller. In one aspect of the present disclosure, adapters 426, 427, and/or 432 may be connected to one or more I/O busses that are connected to system bus 433 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 433 via user interface adapter 428 and display adapter 432. A keyboard 429, mouse 430, and speaker 431 may be interconnected to system bus 433 via user interface adapter 428, which may include, for example, a Super I/O chip integrating multiple device adapters into a single integrated circuit.

In some aspects of the present disclosure, processing system 400 includes a graphics processing unit 437. Graphics processing unit 437 is a specialized electronic circuit designed to manipulate and alter memory to accelerate the creation of images in a frame buffer intended for output to a display. In general, graphics processing unit 437 is very efficient at manipulating computer graphics and image processing, and has a highly parallel structure that makes it more effective than general-purpose CPUs for algorithms where processing of large blocks of data is done in parallel.

Thus, as configured herein, processing system 400 includes processing capability in the form of processors 421, storage capability including system memory (e.g., RAM 424), and mass storage 434, input means such as keyboard 429 and mouse 430, and output capability including speaker 431 and display 435. In some aspects of the present disclosure, a portion of system memory (e.g., RAM 424) and mass storage 434 collectively store the operating system 440 to coordinate the functions of the various components shown in processing system 400.

It should be appreciated that while embodiments herein refer to the masking of images in a photogrammetry application, this is for exemplary purposes and the claims should not be so limited. In other embodiments, the images may be acquired in a nonphotogrammetry application. For example, the camera may be a 3D camera that is configured to directly measure distances. In these embodiments, the distances measured by the camera may be used to determine the position and/or pose of the camera. From this determination, the location of verboten regions may be determined and masked as described herein.

The term "about" is intended to include the degree of error associated with measurement of the particular quantity based upon the equipment available at the time of filing the application.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described. Additionally, while various embodiments of the disclosure have been described, it is to be understood that the exemplary embodiment(s) may include only some of the described exemplary aspects. Accordingly, the disclosure is not to be seen as limited by the foregoing description but is only limited by the scope of the appended claims.

## Claims

1. A photogrammetry system comprising:
a two-dimensional (2D) camera responsive to first executable instructions which when executed by the 2D camera is operable to:
capture a 2D image, and
transmit the 2D image; and
a processing system communicatively couplable to the 2D camera, wherein the processing system is responsive to second executable instructions which when executed by the processing system is operable to:
receive the 2D image from the 2D camera, the 2D image having a three-dimensional (3D) data set associated therewith,
process the 2D image to generate a processed image identifying regions to be masked;
**characterised in that** the processing system is further operable to:
mask at least a portion of the 3D data set based at least in part on the processed image.

2. The system of claim 1, wherein the processing system is further operable to:
save the masked 3D data set to a data store.

3. The system of claim 1, further comprising a user device communicatively couplable to the processing system, the user device being operable to:
mask at least a portion of the processed image to generate a masked image; and
display the masked image on a display of the processing system without displaying the at least the portion of the processed image that is masked.

4. The system of claim 1, wherein to mask the at least the portion of the processed image to generate the masked image is based on a restriction imposed based on a geographic jurisdiction.

5. The system of claim 1, wherein to process the 2D image to generate the processed image comprises:
performing photogrammetry on the 2D image.

6. The system of claim 1, wherein the 2D camera is operable to:
acquire the 3D data set associated with the 2D image.

7. The system of claim 1, wherein to mask the at least the portion of the processed image to generate the masked image is based on three-dimensional information calculated based on at least two 2D images using photogrammetry.

8. The system of claim 1, further comprising an unmanned aerial vehicle, the 2D camera being mounted on the unmanned aerial vehicle.

9. The system of claim 1, wherein masking at least a portion of the 3D data set comprises masking persons or faces associated with the persons.

10. The system of claim 1, wherein the 2D camera is further operable to encrypt the 2D image to generate an encrypted image, wherein transmitting the 2D image comprises transmitting the encrypted image.

11. The system of claim 10, wherein receiving the 2D image comprises receiving the encrypted image, the processing system being further operable to decrypt the encrypted image to convert the encrypted image back into the 2D image.

12. The system of claim 11, wherein the 2D camera is further operable to:
calculate a hash value for the encrypted image.

13. The system of claim 12, wherein the processing system is further operable to:
verify the validity of the encrypted image using the hash value calculated by the 2D camera.

14. A method comprising:
capturing, by a two-dimensional (2D) camera, a 2D image, the 2D image having
a three-dimensional (3D) data set associated therewith; processing, by a processing system, the 2D image to generate a processed image identifying regions to be masked; and
**characterised in that** the method further comprises:
masking, by the processing system, at least a portion of the 3D data set based at least in part on the processed image.

## Patentansprüche

1. Photogrammetriesystem, das Folgendes umfasst:
eine zweidimensionale (2D) Kamera, die auf erste ausführbare Anweisungen reagiert und, wenn sie von der 2D-Kamera ausgeführt werden, zu Folgendem betreibbar ist:
Erfassen eines 2D-Bildes und
Übertragen des 2D-Bildes und
ein Verarbeitungssystem, das kommunikativ an die 2D-Kamera koppelbar ist, wobei das Verarbeitungssystem auf zweite ausführbare Anweisungen reagiert und, wenn sie vom Verarbeitungssystem ausgeführt werden, zu Folgendem betreibbar ist:
Empfangen des 2D-Bildes von der 2D-Kamera, wobei das 2D-Bild einen damit verknüpften dreidimensionalen (3D) Datensatz aufweist,
Verarbeiten des 2D-Bildes, um ein verarbeitetes Bild zu erzeugen, in dem zu maskierende Regionen identifiziert sind;
**dadurch gekennzeichnet, dass** das Verarbeitungssystem ferner zu Folgendem betreibbar ist:
Maskieren von mindestens einem Abschnitt des 3D-Datensatzes mindestens teilweise auf Basis des verarbeiteten Bildes.

2. System nach Anspruch 1, wobei das Verarbeitungssystem ferner zu Folgendem betreibbar ist:
Speichern des maskierten 3D-Datensatzes in einem Datenspeicher.

3. System nach Anspruch 1, das ferner eine Benutzervorrichtung umfasst, die kommunikativ an das Verarbeitungssystem koppelbar ist, wobei die Benutzervorrichtung zu Folgendem betreibbar ist:
Maskieren mindestens eines Abschnitts des verarbeiteten Bildes, um ein maskiertes Bild zu erzeugen; und
Anzeigen des maskierten Bildes auf einer Anzeige des Verarbeitungssystems, ohne den mindestens einen Abschnitt des verarbeiteten Bildes, der maskiert ist, anzuzeigen.

4. System nach Anspruch 1, wobei das Maskieren des mindestens einen Abschnitts des verarbeiteten Bildes, um das maskierte Bild zu erzeugen, auf einer Einschränkung basiert, die auf Basis einer geografischen Rechtsprechung auferlegt ist.

5. System nach Anspruch 1, wobei das Verarbeiten des 2D-Bildes, um das verarbeitete Bild zu erzeugen, Folgendes umfasst:
Durchführen einer Photogrammetrie am 2D-Bild.

6. System nach Anspruch 1, wobei die 2D-Kamera zu Folgendem betreibbar ist:
Erfassen des 3D-Datensatzes, der mit dem 2D-Bild verknüpft ist.

7. System nach Anspruch 1, wobei das Maskieren des mindestens einen Abschnitts des verarbeiteten Bildes, um das maskierte Bild zu erzeugen, auf dreidimensionalen Informationen basiert, die unter Verwendung von Photogrammetrie auf Basis von mindestens zwei 2D-Bildern berechnet werden.

8. System nach Anspruch 1, das ferner ein unbemanntes Luftfahrzeug umfasst, wobei die 2D-Kamera am unbemannten Luftfahrzeug montiert ist.

9. System nach Anspruch 1, wobei das Markieren von mindestens einem Abschnitt des 3D-Datensatzes das Maskieren von Personen oder mit den Personen verknüpften Gesichtern umfasst.

10. System nach Anspruch 1, wobei die 2D-Kamera ferner betreibbar ist, das 2D-Bild zu verschlüsseln, um ein verschlüsseltes Bild zu erzeugen, wobei das Übertragen des 2D-Bildes das Übertragen des verschlüsselten Bildes umfasst.

11. System nach Anspruch 10, wobei das Empfangen des 2D-Bildes das Empfangen des verschlüsselten Bildes umfasst, wobei das Verarbeitungssystem ferner betreibbar ist, das verschlüsselte Bild zu entschlüsseln, um das verschlüsselte Bild zurück in das 2D-Bild umzuwandeln.

12. System nach Anspruch 11, wobei die 2D-Kamera ferner zu Folgendem betreibbar ist:
Berechnen eines Hashwertes für das verschlüsselte Bild.

13. System nach Anspruch 12, wobei das Verarbeitungssystem ferner zu Folgendem betreibbar ist:
Verifizieren der Gültigkeit des verschlüsselten Bildes unter Verwendung des von der 2D-Kamera berechneten Hashwertes.

14. Verfahren, das Folgendes umfasst:
Erfassen eines 2D-Bildes durch eine zweidimensionale (2D) Kamera, wobei das 2D-Bild einen damit verknüpften dreidimensionalen (3D) Datensatz aufweist;
Verarbeiten des 2D-Bildes durch ein Verarbeitungssystem, um ein verarbeitetes Bild zu erzeugen, in dem zu maskierende Regionen identifiziert sind; und
**dadurch gekennzeichnet, dass** das Verfahren ferner Folgendes umfasst:
Maskieren von mindestens einem Abschnitt des 3D-Datensatzes durch das Verarbeitungssystem mindestens teilweise auf Basis des verarbeiteten Bildes.

## Revendications

1. Système de photogrammétrie comprenant :
une caméra bidimensionnelle (2D) répondant à des premières instructions exécutables qui, lorsqu'elles sont exécutées par la caméra 2D, permettent :
de capturer une image 2D, et
de transmettre l'image 2D ; et
un système de traitement pouvant être couplé de manière communicative à la caméra 2D, dans lequel le système de traitement répond à des deuxièmes instructions exécutables qui, lorsqu'elles sont exécutées par le système de traitement permettent :
de recevoir l'image 2D de la caméra 2D, l'image 2D étant associée à un jeu de données tridimensionnelles (3D),
de traiter l'image 2D pour générer une image traitée identifiant des régions à masquer ;
**caractérisé en ce que** le système de traitement permet en outre :
de masquer au moins une partie du jeu de données 3D en se basant au moins en partie sur l'image traitée.

2. Système selon la revendication 1, dans lequel le système de traitement permet en outre :
de sauvegarder le jeu de données 3D masqué dans un magasin de données.

3. Système selon la revendication 1, comprenant en outre un dispositif utilisateur pouvant être couplé de manière communicative au système de traitement, le dispositif utilisateur permettant en outre :
de masquer au moins une partie de l'image traitée pour générer une image masquée ; et
d'afficher l'image masquée sur un dispositif d'affichage du système de traitement sans afficher l'au moins une partie de l'image traitée qui est masquée.

4. Système selon la revendication 1, dans lequel le masquage de l'au moins une partie de l'image traitée pour générer l'image masquée est basé sur une restriction imposée sur la base d'une juridiction géographique.

5. Système selon la revendication 1, dans lequel le traitement de l'image 2D pour générer l'image traitée comprend :
la réalisation d'une photogrammétrie sur l'image 2D.

6. Système selon la revendication 1, dans lequel la caméra 2D, permet :
d'acquérir le jeu de données 3D associé à l'image 2D.

7. Système selon la revendication 1, dans lequel le masquage de l'au moins une partie de l'image traitée pour générer l'image masquée est basé sur des informations tridimensionnelles calculées sur la base d'au moins deux image 2D à l'aide de la photogrammétrie.

8. Système selon la revendication 1, comprenant en outre un véhicule aérien sans pilote, la caméra 2D étant montée sur le véhicule aérien sans pilote.

9. Système selon la revendication 1, dans lequel le masquage d'au moins une partie du jeu de données 3D comprend le masquage de personnes ou de visages associés à des personnes.

10. Système selon la revendication 1, dans lequel la caméra 2D permet en outre de crypter l'image 2D pour générer une image cryptée, dans lequel la transmission de l'image 2D comprend la transmission de l'image cryptée.

11. Système selon la revendication 10, dans lequel la réception de l'image 2D comprend la réception de l'image cryptée, le système de traitement permettant en outre de décrypter l'image cryptée pour convertir l'image cryptée de nouveau en image 2D.

12. Système selon la revendication 11, dans lequel la caméra 2D permet en outre :
de calculer une valeur de hachage pour l'image cryptée.

13. Système selon la revendication 12, dans lequel le système de traitement permet en outre :
de vérifier la validité de l'image image cryptée à l'aide de la valeur de hachage calculée par la caméra 2D.

14. Procédé comprenant :
la capture, par une caméra bidimensionnelle (2D), d'une image 2D, l'image 2D étant associée à un jeu de données tridimensionnelles (3D) ;
le traitement, par un système de traitement, de l'image 2D pour générer une image traitée identifiant des régions à masquer ; et
**caractérisé en ce que** le procédé comprend en outre :
le masquage, par le système de traitement, d'au moins une partie du jeu de données 3D en se basant au moins en partie sur l'image traitée.
